# EUROPÄISCHE PATENTSCHRIFT

(11) **EP 2 117 769 B1**
(45) Veröffentlichungstag und Bekanntmachung des Hinweises auf die Patenterteilung: **09.02.2011**
(21) Anmeldenummer: 07857083.5
(22) Anmeldetag: 21.12.2007
(51) Int. Cl.: B23Q 7/10, B23Q 7/14

(54) **BEARBEITUNGSZENTRUM MIT ZUGEORDNETEM PALETTENSPEICHER UND-HANDHABUNGSSYSTEM**
MACHINING CENTER HAVING ASSOCIATED PALLET STORAGE AND HANDLING SYSTEM
CENTRE D'USINAGE AVEC SYSTÈME ASSOCIÉ DE STOCKAGE ET DE MANUTENTION DE PALETTES

(30) Priorität: 16.02.2007 DE 202007002351 U
(43) Veröffentlichungstag der Anmeldung: 18.11.2009
(73) Patentinhaber: LIEBHERR-VERZAHNTECHNIK GmbH, 87437 Kempten (DE)
(72) Erfinder: FINKENWIRTH, Klaus, 87648 Aitrang (DE); LINGENHÖL, Klaus, 87437 Kempten (DE)
(74) Vertreter: Laufhütte, Dieter
(86) Internationale Anmeldenummer: PCT/EP2007/011376
(87) Internationale Veröffentlichungsnummer: WO 2008/098609

(56) Entgegenhaltungen:
- EP-A- 1 084 794
- EP-A- 1 712 329
- JP-A- 6 063 836

## Beschreibung

Die Erfindung betrifft ein Bearbeitungszentrum mit zugeordnetem Palettenspeicher und Palettenhandhabungssystem.

Für Bearbeitungszentren benötigt man für den mannlosen Betrieb Palettenspeicher und Palettenhandhabungssysteme einschließlich zugänglicher Palettenablageplätze für das Rüsten und für die Kontrolle der Werkstücke.

Im Bearbeitungszentrum wird ein entsprechendes Werkstück, das über ein Palettenhandhabungssystem zugeführt und nach der Bearbeitung wieder abgeführt wird, in der Regel mit spanenden Werkzeugen bearbeitet. Das automatische Be- und Entladen des Bearbeitungszentrums mit der Palette einschließlich des Werkstücks erfolgt durch das Palettenhandhabungssystem von vorne. Hierzu kann das Palettenhandhabungssystem entlang der dem Bearbeitszentrum zugeordneten Palettenspeicher verfahren und entsprechende Paletten aus den Palettenspeichern herausnehmen und dem Bearbeitungszentrum zuführen. Umgekehrt können entsprechend Paletten mit bearbeiteten Werkstücken von Bearbeitungszentren entnommen und einem entsprechenden Palettenplatz wieder zugeführt werden. Zusätzlich kann das Werkstück auf einem entsprechenden Rüstplatz bzw. Kontrollplatz (SPC-Platz) abgelegt werden.

Das Palettenhandhabungssystem verfährt auf einem Fahrweg, der zwischen dem Bearbeitungszentrum und dem Palettenspeicher angeordnet ist. Hierdurch ist eine gefahrlose manuelle Beschickung des Bearbeitungszentrums nicht möglich, da die entsprechende Bedienperson zwangsweise im Schutzbereich des Palettenhandhangungssystems und zusätzlich auf dem Fahrweg des Palettenhandhabungssystems stehen würde.

Aus der EP 1 084 794 A ist eine Ladevorrichtung zum Beladen von Maschinen mit Teilen, wie Werkstücken, Paletten, Futterteilen, Werkzeugen oder dergleichen bekannt. Ein an einer Schiene hängender Portalwagen kann zur Beschickung der Bearbeitungsmaschine mit im Magazin gelagerten Werkstücken entlang der Schiene verfahren werden.

Eine gattungsgemässe Vorrichtung ist aus der JP 06 063836 A bekannt. Darin ist ein Regalfahrzeug zur Beladung einer Maschine gezeigt, dass sich entlang einer Bodenfahrschiene verfahren lässt.

Aufgabe der vorliegenden Erfindung ist es, ein Bearbeitungszentrum mit zugeordnetem Palettenspeicher und mit zugeordnetem Palettenhandhabungssystem zu schaffen, welches neben einer automatischen Beschickung des Bearbeitungszentrums auch eine manuelle Be- bzw. Entladung des Bearbeitungszentrums ermöglicht.

Diese Aufgabe wird durch die Kombination der Merkmale des Anspruchs 1 gelöst.

Nach dieser Lösung ist ein Bearbeitungszentrum mit zugeordnetem Palettenspeicher und mit zugeordnetem Palettenhandhabungssystem geschaffen, bei dem das Bearbeitungssystem von dem Palettenspeicher mittels eines Fahrwegs getrennt ist, auf der das Palettenhandhabungsgerät zum Umschlag der Paletten verfahrbar ist. Die Fahrstraße ist über ein als Plattform dienendes Teil überbrückbar, um einen Zugang zum Bearbeitungszentrum zu ermöglichen und einen Standplatz für das Bedienpersonal zu schaffen.

Bevorzugte Ausgestaltungen der Erfindung ergeben sich aus den sich an den Hauptanspruch anschließenden Unteransprüchen.

Aus Sicherheitsgründen ist der Palettenspeicher von einer Abgrenzungswand umgeben, wobei das als Plattform dienende Teil ein Teil dieser Abgrenzungswand sein kann.

Vorteilhaft ist das Bearbeitungszentrum mit dem zugeordneten Palettenspeicher und dem Palettenhandhabungssystem bei automatischer Arbeitsweise durch die Abgrenzungswand abgesichert, so dass hier keine Bedienperson unbefugt während des automatischen Hin- und Herfahrens des Palettenhandhabungssystems in den Arbeitsbereich gelangen kann. Für den Fall einer manuellen Be- und Entladung des Bearbeitungszentrums wird durch das bewegliche Teil eine Plattform gebildet, die einerseits dem Bedienpersonal einen Eingang in den inneren Bereichen des Palettenhandhabungssystems ermöglicht und andererseits einen sicheren Standplatz vor dem Bearbeitungszentrum für das Bedienpersonal schafft. In dem Bereich der Plattform und des in der Abgrenzungswand geschaffenen Eingangs ist der Palettenspeicher ausgespart, so dass in diesem Bereich z. B. über einen Lasthaken eines Kransystems eine Palette mit Werkstück zum Bearbeitungszentrum verfahren werden kann und dort von dem Bedienpersonal in gewünschter Art und Weise gehandhabt werden kann. Die Palette mit Werkstück wird dabei von vorne auf die Beladestelle des Bearbeitungszentrums aufgebracht.

Damit ist das Bearbeitungszentrum entsprechend der hier vorgestellten Ausführungsvariante manuell be- und entladbar und betreibbar.
Demnach kann der Fahrweg aus Bodenschienen bestehen. Gemäß einer weiteren vorteilhaften Ausgestaltung der Erfindung kann der Palettenspeicher aus einem Hochregallager bestehen.

Zusätzlich zu dem Bearbeitungszentrum kann ein Rüstplatz und/oder ein Kontrollplatz, d. h. ein sogenannter SPC-Platz, vorgesehen sein.

Wie auch das Bearbeitungszentrum können der Kontrollplatz bzw. der Rüstplatz ebenfalls automatisch beschickbar sind.

Vorteilhaft ist eine Steuerung zum Produktions- und Palettenmanagement vorhanden.

Der als Plattform dienende Teil der Abgrenzungswand kann rotatorisch oder linear verfahrbar sein.

Das Palettenhandhabungssystem ist in bevorzugter Art und Weise ein Regatfahrzeug.

Bei höher bauenden Regalen ist es besonders vorteilhaft, wenn das Regalfahrzeug einerseits auf der Bodenschiene und andererseits an einer am Palettenspeicher angeordneten Führungsschiene abgestützt bzw. gehalten ist. Diese Führungsschiene ist vorzugsweise im oberen Bereich des Regalfahrzeugs angeordnet.

Gemäß einer weiteren vorzugsweise Ausgestaltung der Erfindung ist die Führungsschiene im Bereich der Plattform über einen Mechanismus zu öffnen. Alternativ kann auch an dieser Stelle eine Lücke gelassen werden, wenn die Eingriffselemente des Regelfahrzeugs derart dimensioniert sind, dass die Lücke überfahren werden kann. Dadurch bedingt kann der Lasthaken eines Krans auch in diesem Bereich in Richtung des Bearbeitungszentrums eingefahren werden, um beispielsweise eine Palette mit einem Werkstück zum Beladen herbeizuführen.

Weitere Merkmale, Einzelheiten und Vorteile der Erfindung werden anhand eines in der Zeichnung dargestellten Ausführungsbeispiels näher erläutert. Es zeigen:
- Figuren 1 - 4:: Ansichten einer ersten Ausführungsform eines Bearbeitungszen- trums mit zugeordnetem Palettenspeicher und - handhabungssy- stem gemäß einer ersten Ausführungsform der vorliegenden Erfin- dung und
- Figuren 5 - 10:: Darstellungen entsprechend der Figur 1 mit einer zweiten alternati- ven Ausführungsform des Bearbeitungszentrums nach den Figuren 1 bis 4.

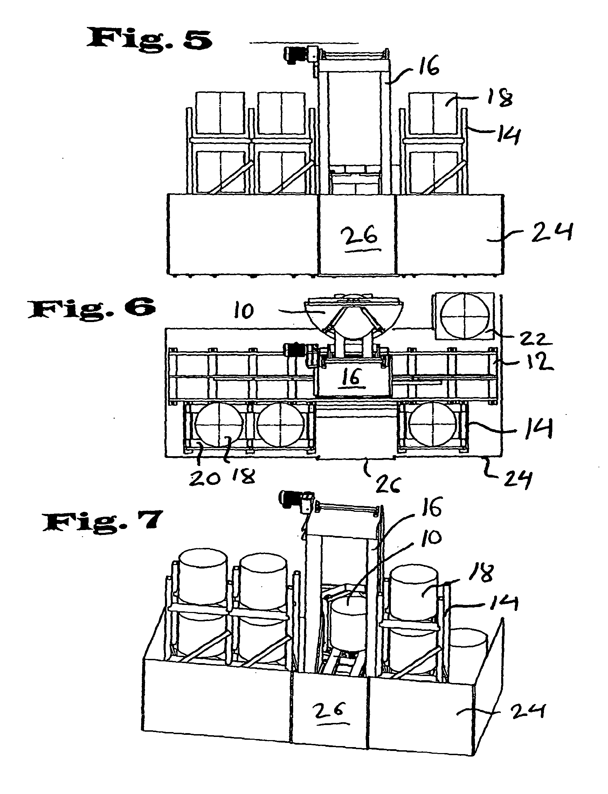

In den Figuren 5 bis 10 ist ein Bearbeitungszentrum 10 dargestellt, welches über eine Bodenschiene 12 von einem als Hochregallager ausgebildeten Palettenstapel 14 beabstandet ist. Entlang der Bodenschienen 14 verfährt ein als Regalfahrzeug 16 ausgebildetes Palettenhandhabungsgerät, mit welchem die mit Werkstücken 18 beladenen Paletten 20 aus dem Palettenspeicher 14 entnommen werden können und dem Bearbeitungszentrum 10 zugeführt werden können. Umgekehrt können entsprechend vollständig oder teilweise bearbeitete Werkstücke 18 mit den zugehörigen Paletten 20 wieder zurück in den Palettenspeicher 14 transportiert werden.

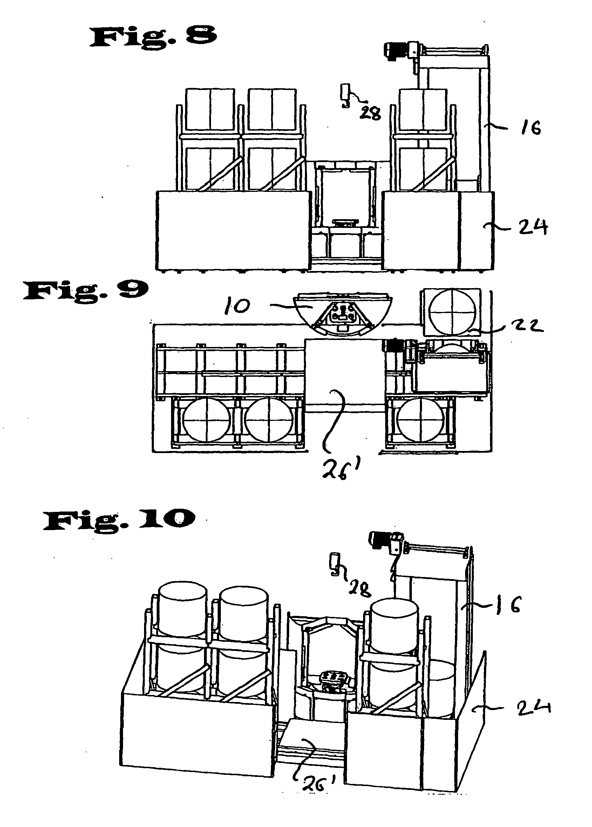

Neben dem Bearbeitungszentrum ist insbesondere den Figuren 6 und 9 ein Rüstplatz 22 angeordnet, in dem das Werkstück vor Einfahren in das Bearbeitungszentrum 10 gerüstet werden kann. Zusätzlich bzw. alternativ kann dieser Platz 22 auch als Kontrollplatz, sogenannter SPC-Platz dienen.

Wie insbesondere in den Figuren 5 und 7 dargestellt, ist das Bearbeitungszentrum sowie der Palettenspeicher mittels einer Abgrenzungswand 24 umgeben. Ein Teil 26 dieser Abgrenzungswand ist als abklappbares Teil ausgebildet. Dieses abklappbare Teil ist dem Berabeitungszentrum 10 gegenüberliegend vorgesehen. Der Bereich zwischen Bearbeitungszentrum und abklappbaren Teil 26 der Abgrenzungswand 24 ist vom Palettenspeicher 14 freigelassen. Das abklappbare Teil 26 der Abgrenzungswand 24 ist in dem Bereich derart über eine Schwenk- und/oder Linearbewegung verfahrbar, dass es unter Freigebung eines Zugangs in der Abgrenzungswand 24 über die Bodenschienen 14 des Regalfahrzeugs 16 legbar ist, so dass, wie in den Figuren 9 und 10 dargestellt, eine Plattform 26' entsteht, auf der das Bedienpersonal zum manuellen Bedienen des Bearbeitungszentrums 10 stehen kann. Hierdurch ist also einerseits ein Zugang für das Bedienpersonal geschaffen. Andererseits wird eine Arbeitsplattform oberhalb der Bodenschienen gebildet.

Wenn das Bearbeitungszentrum zur manuellen Beschickung eingerichtet ist, wie dies in den Figuren 8, 9 und 10 dargestellt ist, kann eine Palette mit Werkstück über einen Lasthaken 28, wie er rein schematisch in den Figuren 8 und 10 dargestellt ist, zugeführt werden.

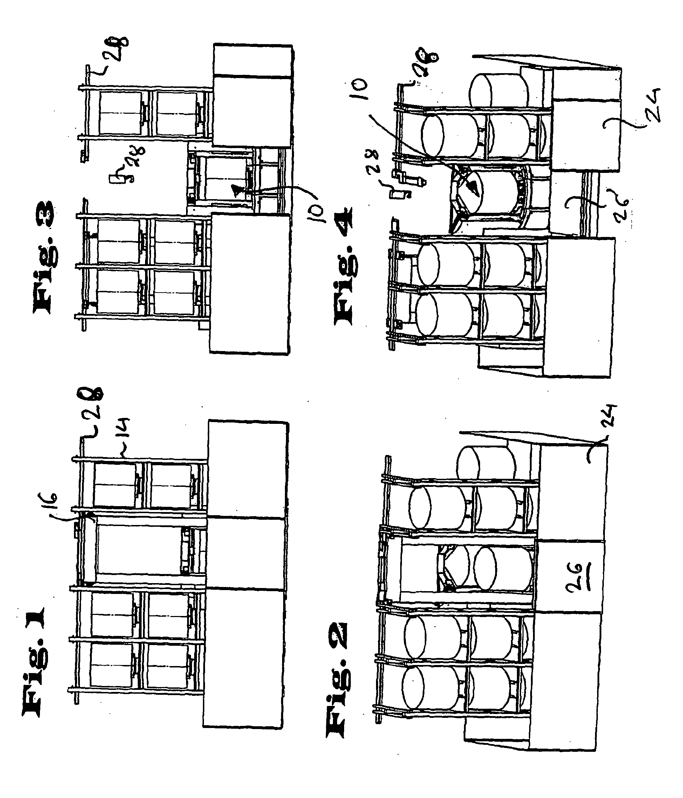

In den Figuren 1 bis 4 ist eine alternative Ausführungsvariante zu derjenigen gemäß den Figuren 5 bis 10 gezeigt. Gleiche Teile sind mit gleichen Bezugsziffern versehen. Der Unterscheid dieser Ausführungsvariante von derjenigen gemäß der Figuren 5 bis 10 besteht darin, dass das Regalfahrzeug 16 hier einerseits auf Bodenschienen verfährt, während es zu seinem oberen Bereich entlang einer am Palettenspeicher 14 angeordneten Führungsschiene 28 verläuft. Hierdurch ist eine vergleichsweise höhere Stabilität des Regalfahrzeugs gewährleistet, die auch eine höhere Bauhöhe des Palettenspeichers 14 erlaubt.

Um nun während des manuellen Betriebs, wie er in den Figuren 3 und 4 dargestellt ist, ein Zuführen eines Werkstücks über einen Lasthaken 28 zu ermöglichen, ist der Bereich der Führungsschiene 28, der oberhalb des abklappbaren Teils 26 der Abgrenzungswand 24 liegt, zu öffnen, wie dies in den Figuren 3 und 4 gezeigt ist. Hierbei kann ein Teil der Führungsschiene 28 aufklappbar gestaltet sein, wie dies insbesondere aus Figur 4 zu sehen ist.

## Patentansprüche

1. Bearbeitungszentrum (10) mit zugeordnetem Palettenspeicher (14) und - handhabungssystem, wobei
das Bearbeitungszentrum von dem Palettenspeicher mittels eines Fahrwegs getrennt ist, auf dem ein Palettenhandhabungsgerät (16) zum Umschlag der Paletten verfahrbar ist, **dadurch gekennzeichnet, dass** ein als Plattform dienendes bewegliches Teil (26) zur Überbrückung der Fahrstrasse vorgesehen ist, um einen Zugang zum Bearbeitungszentrum zu ermöglichen.

2. Bearbeitungszentrum nach Anspruch 1, **dadurch gekennzeichnet, dass** der Palettenspeicher von einer Abgrenzungswand umgeben ist.

3. Bearbeitungszentrum nach Anspruch 1 oder 2, **dadurch gekennzeichnet, dass** das die Fahrstrasse überbrückende Teil als Teil der Abgrenzungswand ausgebildet ist, wobei es aus seiner in der Abgrenzungswand integrierten Position in die die Fahrstrasse überbrückende Position bewegbar ist.

4. Bearbeitungszentrum nach einem der Ansprüche 1 bis 3, **dadurch gekennzeichnet, dass** die Bewegung des Teils durch Abklappen oder durch eine Schiebbewegung erfolgt.

5. Bearbeitungszentrum nach einem der Ansprüche 1 bis 4, **dadurch gekennzeichnet, dass** der Fahrweg aus Bodenschienen besteht.

6. Bearbeitungszentrum nach einem der Ansprüche 1 bis 5, **dadurch gekennzeichnet, dass** der Palettenspeicher aus einem Hochregallager besteht.

7. Bearbeitungszentrum nach einem der Ansprüche 1 bis 6, **dadurch gekennzeichnet, dass** zusätzlich ein Rüstplatz und/oder ein Kontrollplatz (SPC-Platz) vorgesehen sind.

8. Bearbeitungszentrum nach einem der Ansprüche 1 bis 7, **dadurch gekennzeichnet, dass** es und/oder der Rüstplatz und/oder der Kontrollplatz automatisch beschickbar sind.

9. Bearbeitungszentrum nach einem der Ansprüche 1 bis 8, **dadurch gekennzeichnet, dass** eine Steuerung zum Produktions- und Palettenmanagement vorhanden ist.

10. Bearbeitungszentrum nach einem der Ansprüche 1 bis 9, **dadurch gekennzeichnet, dass** das Palettenhandhabungsgerät ein Regalfahrzeug ist.

11. Bearbeitungszentrum nach Anspruch 10, **dadurch gekennzeichnet, dass** das Regalfahrzeug einerseits auf der Bodenschiene und andererseits an einer am Palettenspeicher angeordneten Führungsschiene abgestützt bzw. gehalten ist.

12. Bearbeitungszentrum nach Anspruch 11, **dadurch gekennzeichnet, dass** die Führungsschiene im Bereich der abklappbaren Plattform über einen Mechanismus geöffnet werden kann.

13. Bearbeitungszentrum nach Anspruch 11, **dadurch gekennzeichnet, dass** die Führungsschiene im Bereich der abklappbaren Plattform eine Lücke aufweist, die vom Regelfahrzeug überfahrbar ist.

## Claims

1. A machining center (19) having an associated pallet store (14) and pallet handling system, wherein
the machining center is separated from the pallet store by means of a travel path on which a pallet handling device (16) can be moved for the transfer of the pallets, **characterized in that** a moveable part (26) serving as a platform is provided for bridging the travel route to enable access to the machining center.

2. A machining center in accordance with claim 1, **characterized in that** the pallet store is surrounded by a partition wall.

3. A machining center in accordance with either of claims 1 or 2, **characterized in that** the part bridging the travel route is made as part of the partition wall, with it being able to be moved out of its position integrated in the partition wall into the position bridging the travel route.

4. A machining center in accordance with one of the claims 1 to 3, **characterized in that** the movement of the part takes place by folding down or by a sliding movement.

5. A machining center in accordance with one of the claims 1 to 4, **characterized in that** the travel path comprises floor rails.

6. A machining center in accordance with one of the claims 1 to 5, **characterized in that** the pallet store comprises a high rack store.

7. A machining center in accordance with one of the claims 1 to 6, **characterized in that** a setting up station and/or a control station (SPC station) are additionally provided.

8. A machining center in accordance with one of the claims 1 to 7, **characterized in that** it and/or the setting up station and/or the control station can be loaded automatically.

9. A machining center in accordance with one of the claims 1 to 8, **characterized in that** a control is present for the production management and pallet management.

10. A machining center in accordance with one of the claims 1 to 9, **characterized in that** the pallet handling device is a lift stacking vehicle.

11. A machining center in accordance with claim 10, **characterized in that** the lift stacking vehicle is supported or held, on the one hand, on the floor rail and, on the other hand, at a guide rail arranged at the pallet store.

12. A machining center in accordance with claim 11, **characterized in that** the guide rail can be opened in the region of the platform which can be folded down via a mechanism.

13. A machining center in accordance with claim 11, **characterized in that** the guide rail has a gap which can be traveled over by the lift stacking vehicle in the region of the platform which can be folded down.

## Revendications

1. Centre d'usinage (10) avec système associé de stockage (14) et de manutention des palettes, le centre d'usinage étant séparé du système de stockage des palettes au moyen d'une voie, sur laquelle un appareil de manutention des palettes (16) destiné au transbordement des palettes est déplaçable,
**caractérisé**
**en ce qu'**une pièce mobile (26) servant de plate-forme est prévue pour ponter l'itinéraire, afin de permettre un accès au centre d'usinage.

2. Centre d'usinage selon la revendication 1, **caractérisé en ce que** le système de stockage des palettes est entouré d'une cloison de délimitation.

3. Centre d'usinage selon la revendication 1 ou 2, **caractérisé en ce que** la pièce pontant l'itinéraire est agencée comme élément de la cloison de délimitation, celle-ci étant déplaçable de sa position intégrée dans la cloison de délimitation dans la position pontant l'itinéraire.

4. Centre d'usinage selon une quelconque des revendications 1 à 3, **caractérisé en ce que** le mouvement de la pièce s'effectue par rabattement ou par un mouvement de poussée.

5. Centre d'usinage selon une quelconque des revendications 1 à 4, **caractérisé en ce que** la voie est constituée de rails au sol.

6. Centre d'usinage selon une quelconque des revendications 1 à 5, **caractérisé en ce que** le système de stockage des palettes est constitué d'un dépôt sur rayons hauts.

7. Centre d'usinage selon une quelconque des revendications 1 à 6, **caractérisé en ce qu'**un poste d'équipement et/ou un poste de contrôle (poste SPC) sont prévus à titre supplémentaire.

8. Centre d'usinage selon une quelconque des revendications 1 à 7, **caractérisé en ce que** celui-ci et/ou le poste d'équipement et/ou le poste de contrôle sont chargeables automatiquement.

9. Centre d'usinage selon une quelconque des revendications 1 à 8, **caractérisé en ce qu'**une commande est présente pour la gestion de la production et des palettes.

10. Centre d'usinage selon une quelconque des revendications 1 à 9, **caractérisé en ce que** l'appareil de manutention des palettes est un véhicule régulateur.

11. Centre d'usinage selon la revendication 10, **caractérisé en ce que** le véhicule régulateur s'appuie ou se maintient d'une part sur les rails au sol, et d'autre part sur une glissière disposée sur le système de stockage des palettes.

12. Centre d'usinage selon la revendication 11, **caractérisé en ce que** la glissière peut être ouverte par un mécanisme dans la zone de la plate-forme rabattable.

13. Centre d'usinage selon la revendication 11, **caractérisé en ce que** la glissière présente un interstice dans la zone de la plate-forme rabattable, qui est franchissable par le véhicule régulateur.
